Europäisches Patentamt

European Patent Office

Office européen des brevets

(19)

(11) Publication number: **0 182 841**
**B1**

# EUROPEAN PATENT SPECIFICATION

(12)

(45) Date of publication of patent specification: **09.08.89**

(51) Int. Cl.⁴: **B 29 D 11/00**, G 02 B 1/10

(21) Application number: **85902590.0**

(22) Date of filing: **24.05.85**

(86) International application number:
**PCT/GB85/00222**

(87) International publication number:
**WO 85/05317 05.12.85 Gazette 85/26**

(54) **COATING MATERIAL FOR LENSES.**

(30) Priority: **24.05.84 GB 8413262**

(43) Date of publication of application:
**04.06.86 Bulletin 86/23**

(45) Publication of the grant of the patent:
**09.08.89 Bulletin 89/32**

(84) Designated Contracting States:
**AT BE CH DE FR GB IT LI LU NL SE**

(56) References cited:
**DE-A-3 042 083**
**FR-A-2 423 521**
**GB-A- 596 005**
**GB-A- 798 877**
**US-A-3 953 115**
**US-A-4 191 501**
**US-A-4 319 846**

(73) Proprietor: **University of Strathclyde**
**McCance Building 16 Richmond Street**
**Glasgow G1 1YQ, Scotland (GB)**

(72) Inventor: **PERKINS, Peter, Graham**
**7 Menzies Terrace**
**Fintry, Stirlingshire G63 OYJ (GB)**
Inventor: **JAMIESON, Rosemary, Isobel**
**74 Holeburn Road**
**Glasgow G43 Scotland (GB)**

(74) Representative: **MacDougall, Donald Carmichael**
**et al**
**Messrs. Cruikshank & Fairweather 19 Royal**
**Exchange Square**
**Glasgow G1 3AE, Scotland (GB)**

Courier Press, Leamington Spa, England.

## Description

This invention relates to a coating material for protecting a lens surface against scratching, to a method of manufacturing a lens and to a manufactured lens.

Plastic lenses for spectacles are normally produced by a moulding or forming technique to provide a lens blank which is then peripherally cut to the correct shape to match and fit into a particular spectacle frame. It is important that the lens blank is cut so that its focal centre (or centres in the case of a bifocal lens) is correctly positioned in the finished lens and for this purpose a focimeter is used to check the optical power of the lens blank and to mark its focal centre (or centres). Thereafter a self-adhesive pad is stuck to the lens blank and used as an attachment for an arbor mounted in the chuck of a grinding machine. The grinding wheel of the machine then peripherally cuts the lens to the correct pattern around the focal centre (or centres) utilising a jig or pattern.

Because the plastics material from which spectacle lenses are manufactured is relatively soft compared to normal glass lenses, it can be easily rendered unsaleable as a result of light surface scratches. This ease with which the lenses can be scratched means that a large number of lenses tend to be damaged during the cutting and shaping procedures and have to be scrapped.

To prevent scratching of such plastic lenses it has previously been proposed to coat the lens surfaces of the lens blank with shellac material but because the shellac material distorts the optical properties of the lens blank centration of the lens blank has proved difficult and accordingly the shellac coating had to be removed from the lens blank at least during the focal centre identification procedure. Furthermore the shellac coating requires to be removed from the finished lens prior to sale thereof. In another prior proposal described in GB—A—798877 on which the preambles of claims 1, 7, 10 are based flexible adhesive sheets are applied to the lens surfaces for application of reference markings and removed from the finished lens prior to sale thereof.

It is an object of the present invention to provide an improved form of coating material which can be applied to a lens blank and left thereon at least until the finished lens is produced. A further object is to provide an improved method of manufacturing a lens. A still further object is to provide an improved lens incorporating a coating.

According to the present invention there is provided a coating material for protecting a lens surface against scratching, said material comprising a solution containing nitrocellulose in solvent, the nitrocellulose being present in the solvent in the range 2.5% to 3.8% by weight.

Preferably the nitrocellulose is present in the solvent in the amount 3.1% by weight.

The nitrocellulose may be dissolved in solvent in pure form or may be present as a constituent of collodion. The collodion may have the specific constitution set forth in the British Pharmacopoeia 1980 or may be a proprietary collodion such as that marketed by B.D.H. Chemicals Ltd. of Poole, Dorset, England, under their product code No. 33041 (which is a flexible collodion). In the latter case the collodion is preferably present in the solution in the range 20% to 30% by volume of the solution. Best results have been achieved where the collodion comprises 25% by volume of the solution.

The solvent is preferably a volatile solvent such as di-ethyl ether, methanol, ethanol or mixtures thereof such as are found in methylated spirits, and/or cellulose solvent such as is marketed by International Paints plc of Rottenpark Street, Birmingham, England, under their code name "Flowline fast thinner 86".

In accordance with another aspect of the invention there is provided a method of manufacturing a lens comprising the steps of forming a lens blank, forming on each optical surface of the blank a coating of material having nitrocellulose as its principal constituent, identifying and marking the focal centre of the lens blank using a focimeter, and peripherally cutting the lens blank to a predetermined shape with respect to the marked focal centre whilst said coating is in situ.

Preferably the coating is formed on the lens blank by application to the lens blank of a volume of the coating material in accordance with the present invention. Application may be by dipping and spinning the lens blank to remove excess solution which is particularly successful in forming coatings of even thickness. Alternatively application may be by wiping, brushing or spraying. It is preferred that each coating on the lens blank has a thickness in the range $5$—$50 \times 10^{-4}$ mm. A thickness of $10 \times 10^{-4}$ mm has yielded particularly successful results.

Embodiments of the present invention will now be described by way of example.

In a first example a coating material in accordance with the present invention is formed by diluting, with solvent, flexible collodion as manufactured by B.D.H. Chemicals Ltd. and sold under their product number 33041 as aforesaid. Stirring of the two components together at room temperature for a short time achieves a homogeneous mixture which forms the coating material. The solution of the first example contains 25% by volume of flexible collodion 33041 in cellulose solvent as marketed by International Paints plc under the code name 'Flowline fast thinner 86' (as aforesaid). Various other concentrations have been prepared with the flexible collodion present in the range 20% to 30% by volume of the solution.

Flexible collodion BP is a mixture of colophony, castor oil and collodion BP, the latter being a mixture of nitrocellulose dissolved in solvent ether and ethanol. In a solution of cellulose solvent and flexible collodion BP present in the range 20% to 30% by volume of the solution the nitrocellulose is present in the solvent in the range 2.5% to 3.8% by weight and the optimum point is 25% by volume, i.e., 3.1% by weight.

The various coating materials manufactured as aforesaid are of such viscosity as to be easily applied to the surface of a lens blank either by spraying, dipping, brushing or wiping so as to form a relatively smooth and even coating which is quick drying. Typical drying times for thin coatings having a thickness of the order of $5$—$50 \times 10^{-4}$ mm lie in the range $5$—$10$ seconds and result from evaporation of the solvent under mild heat.

The coating formed on the lens blank as aforesaid is essentially transparent and is of approximately the correct optical properties to permit the optical power of the lens blank and its focal centre (or centres) to be checked and located using a focimeter in the same manner as prevailed hitherto in the absence of a coating on the lens blank. The lens coating resulting from the use of the coating materials described above is water resistant but can easily be removed from the lens blank or the finished lens using a solvent such as methanol, methylated spirits or ethanol. Furthermore because the coating resulting from the coating material is essentially transparent and does not disguise the optical properties either of the lens blank or of the finished lens and so may be left on the finished lens even when it is in use. If such a coating becomes scratched during use it can be removed easily and a new coating applied or, alternatively, a further coating can be applied on top of the first coating. With this arrangement the surfaces of a lens can be kept free from scratches both during manufacture of the lens and during use of the lens.

In order to apply a coating to a lens in accordance with the present invention the lens or lens blank may be subjected to a wiping, brushing, spraying or dipping process. If even thickness of coating is of particular concern dipping followed by spinning to remove excess solution provides best results.

In accordance with a further aspect of the invention manufacture of a lens from a lens blank is undertaken by coating the optical surfaces of the lens blank immediately after the molding or forming process and prior to the identification and marking process in which a conventional focimeter is used. The coating is maintained on the optical surfaces throughout grinding or cutting of the peripheral shape and fitting of the cut lens to its frame.

The coating which is formed on the lens blank is free from solvent as a consequence of vapourisation and has nitrocellulose as its principal constituent when the coating material is as described above in the first example.

The coating material may be applied to many articles, such as glass lenses, and is not limited to plastic lenses.

## Claims

1. A coating material for protecting a lens surface against scratching, characterised in that said material comprises a solution containing nitrocellulose in solvent, the nitrocellulose being present in the solvent in the range 2.5% to 3.8% by weight.

2. A material as claimed in claim 1, characterised in that the nitrocellulose is present in the solvent in the amount 3.1% by weight.

3. A material as claimed in either preceding claim, characterised in that the solvent is a cellulose solvent namely 'Flowline Fast Thinner 86'.

4. A material as claimed in any preceding claim, characterised in that the nitrocellulose is a constituent of collodion contained in said solution.

5. A material as claimed in claim 4, characterised in that the collodion is present in said solution in the range 20% to 30% by volume of the solution.

6. A material as claimed in claim 5, characterised in that the collodion comprises 25% by volume of the solution.

7. A method of manufacturing a lens comprises the steps of forming a lens blank, forming on each optical surface of the blank a coating, identifying and marking on the coating the focal centre of the lens blank using a focimeter, and peripherally cutting the lens blank to a predetermined shape with respect to the marked focal centre whilst said coating is in situ, characterised in that the coating is deposited from a coating material as claimed in any one of claims 1—6.

8. A method as claimed in claim 7, characterised in that the coating is formed on the lens blank by application to the lens blank of a volume of said coating material.

9. A method as claimed in claim 8, characterised in that said coating material is applied to the lens blank by dipping the blank into the coating material and then spinning the lens blank to remove excess solution and to form coatings of even thickness.

10. A lens having in situ on each optical surface a coating for protection against scratching characterised in that the coating results from the use of a coating material comprising a solution containing nitrocellulose in solvent, the nitrocellulose being present in the solvent in the range 2.5% to 3.8% by weight.

11. A lens as claimed in claim 10, characterised in that each said coating has a thickness in the range 5 to $50 \times 10^{-4}$ mm.

12. A lens as claimed in claim 11, characterised in that each said coating has a thickness of about $10 \times 10^{-4}$ mm.

## Patentansprüche

1. Beschichtungsmaterial zum Schutz einer Linsenoberfläche gegen Kratzer, dadurch gekennzeichnet, daß das genannte Material eine Lösung aufweist, die Zellulosenitrat in Lösungsmittel enthält, wobei das in dem Lösungsmittel vorhandene Zellulosenitrat zwischen 2,5 und 3,8 Gewichtsprozent beträgt.

2. Material gemäß Anspruch 1, dadurch gekennzeichnet, daß das in dem Lösungsmittel enthaltene Zellulosenitrat 3,1 Gewichtsprozent beträgt.

3. Material gemäß jedem der vorstehenden Ansprüche, dadurch gekennzeichnet, daß das Lösungsmittel ein Zelluloselösungsmittel ist, nämlich 'Flowline Fast Thinner 86'.

4. Material gemäß irgend einem der vorstehenden Ansprüche, dadurch gekennzeichnet, daß das Zellulosenitrat ein Bestandteil von Kollodium ist, das in der genannten Lösung enthalten ist.

5. Material wie in Anspruch 4 beansprucht, dadurch gekennzeichnet, daß das in der genannten Lösung vorhandene Kollodium zwischen 20 und 30 Volumenprozent der Lösung beträgt.

6. Material wie in Anspruch 5 beansprucht, dadurch gekennzeichnet, das Kollodium 25 Volumenprozent der Lösung beträgt.

7. Ein Verfahren zur Herstellung einer Linse umfasst die Schritte des Bildens eines Linsenrohlings, des Ausbildens einer Beschichtung auf jeder optischen Oberfläche des Rohlings, das Feststellens und des Markierens der optischen Achse des Linsenrohlings auf der Beschichtung mittels eines Fokometers und das peripherische Schneiden des Linsenrohlings in eine vorbestimmte Form in bezug auf die markierte optische Achse, während die genannte Beschichtung in situ ist, dadurch gekennzeichnet, daß die Beschichtung aus einem Beschichtungsmaterial wie in einem der Ansprüche 1—6 beansprucht gebildet ist.

8. Verfahren wie in Anspruch 7 beansprucht, dadurch gekennzeichnet, daß die Beschichtung auf dem Linsenrohling gebildet wird durch Auftragen einer Menge des genannten Beschichtungsmaterials auf den Linsenrohling.

9. Verfahren wie in Anspruch 8 beansprucht, dadurch gekennzeichnet, daß das genannte Beschichtungsmaterial auf den Linsenrohling aufgetragen wird, indem man den Rohling in das Beschichtungsmaterial taucht und dann den überschüssige Lösung zu entfernen und um von Beschichtungen gleicher Dicke zu schaffen.

10. Linse, die in situ auf jeder optischen Oberfläche eine Beschichtung zum Schutz gegen Kratzer hat, dadurch gekennzeichnet, daß die Beschichtung aus der Verwendung eines Beschichtungsmaterials resultiert, das eine Lösung aufweist, die Zellulosenitrat in Lösungsmittel enthält, wobei das in dem Lösungsmittel vorhandene Zellulosenitrat zwischen 2,5 und 3,8 Gewichtsprozent beträgt.

11. Linse wie in Asnpruch 10 beansprucht, dadurch gekennzeichnet, daß die Beschichtung eine Dicke zwischen 5 bis $50 \times 10^{-4}$ mm hat.

12. Linse wie in Anspruch 11 beansprucht, dadurch gekennzeichnet, daß jede genannte Beschichtung eine Dicke von etwa $10 \times 10^{-4}$ mm hat.

## Revendications

1. Matériau de revêtement pour protéger la surface des lentilles contre la rayage, caractérisé en ce que ce matériau comprend une solution contenant de la nitrocellulose dans un solvant, la nitrocellulose étant présente dans le solvant en une quantité de 2,5% à 3,8% en poids.

2. Matériau suivant la revendication 1, caractérisé en ce que la nitrocellulose est présente dans le solvant en une quantité de 3,1% en poids.

3. Matériau suivant l'une quelconque des revendications précédentes, caractérisé en ce que le solvant est un solvant de la cellulose, à savoir le 'Flowline Fast Thinner 86'.

4. Matériau suivant l'une quelconque des revendications précédentes, caractérisé en ce que la nitrocellulose est un constituant du collodion contenu dans cette solution.

5. Matériau suivant la revendication 4, caractérisé en ce que le collodion est présent dans la solution à raison de 20% à 30% en volume de la solution.

6. Matériau suivant la revendication 5, caractérisé en ce que le collodion constitue 25% en volume de la solution.

7. Procédé pour fabriquer une lentille comprenant les étapes de formation d'une ébauche de lentille, formation d'un revêtement sur chaque surface optique de l'ébauche, identification et marquage sur le revêtement du foyer de l'ébauche de lentille avec un focimètre, et découpe du pourtour de l'ébauche de lentille selon une forme prédéterminée en fonction du foyer marqué tandis que ce revêtement est in situ, caractérisé en ce que le revêtement est dépose à partir d'un matériau de revêtement suivant l'une quelconque des revendications 1—6.

8. Procédé suivant la revendication 7, caractérisé en ce que le revêtement est formé sur l'ébauche de lentille par application à l'ébauche de lentille d'un volume de ce matériau de revêtement.

9. Procédé suivant la revendication 8, caractérisé en ce que l'on applique ce matériau de revêtement sur l'ébauche de lentille en immergeant celle-ci dans le matériau de revêtement et en faisant ensuite tourner l'ébauche de lentille pour éliminer la solution en excès et former des revêtements d'épaisseur uniforme.

10. Lentille ayant in situ sur chaque surface optique un revêtement de protection contre le rayage, caractérisée en ce le revêtement résulte de l'utilisation d'un matériau de revêtement comprenant une solution contenant de la nitrocellulose dans un solvant, la nitrocellulose étant présente dans le solvant en une quantité de 2,5% à 3,8% en poids.

11. Lentille suivant la revendication 10, caractérisée en ce que chaque revêtement a une épaisseur dans la gamme de 5 à $50 \times 10^{-4}$ mm.

12. Lentille suivant la revendication 11, caractérisée en ce que chaque revêtement a une épaisseur d'environ $10 \times 10^{-4}$ mm.